# EUROPEAN PATENT APPLICATION

(11) **EP 1 734 602 A1**
(43) Date of publication of application: **20.12.2006**
(21) Application number: 05721714.3
(22) Date of filing: 29.03.2005
(51) Int. Cl.: H01M 4/88, H01M 4/86, H01M 8/10

(54) **POWDER CATALYST MATERIAL, METHOD FOR PRODUCING SAME AND ELECTRODE FOR SOLID POLYMER FUEL CELL USING SAME**

(30) Priority: 09.04.2004 JP 2004115510
(71) Applicant: TOYOTA JIDOSHA KABUSHIKI KAISHA, Toyota-shi, Aichi-ken 471-8571 (JP)
(72) Inventor: KADOTANI, Satoshi, Toyota-shi, Aichi 4718571 (JP); HATANAKA, Tatsuya, c/o KK Toyota Chuo Kenkyusho, Nagakute-cho, Aichi-gun, Aichi 4801192 (JP)
(74) Representative: Kuhnen, Rainer-Andreas
(86) International application number: PCT/JP2005/006575
(87) International publication number: WO 2005/099002

(57) **Abstract**

The battery performance of a solid polymer fuel cell is enhanced by improving a three-phase interface. A catalyst carrier conductive material 10, solid polymer electrolyte 20 and 30, and a good solvent and a poor solvent with respect to the solid polymer electrolyte are mixed so as to prepare an ink in which at least part of the solid polymer electrolyte is colloidalized. The ink is then dried to produce a powder catalytic material 40, which is applied to an electrolyte membrane or a gas diffusion layer, thereby forming a catalyst layer of an electrode.

## Description

### TECHNICAL FIELD

The present invention relates to a catalytic material for producing an electrode catalyst layer of a solid polymer fuel cell, a method for manufacturing the same, and a solid polymer fuel cell electrode using the same.

### BACKGROUND ART

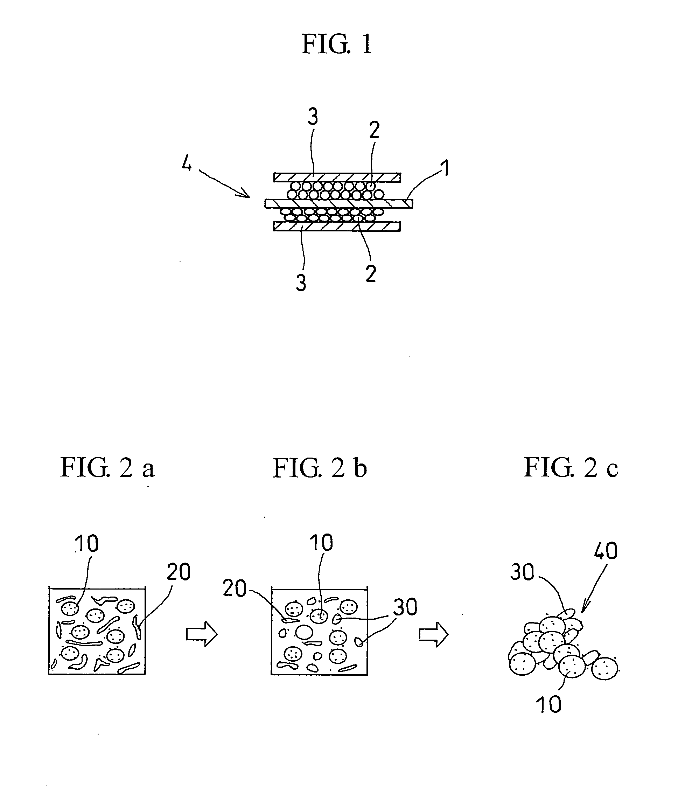

As shown in Fig. 1, a solid polymer fuel cell includes an electrolyte membrane 1 formed of an ion-exchange membrane, a membrane-electrode assembly (MEA) 4 composed of a catalyst layer 2 and a gas diffusion layer 3 that are disposed on both sides of the electrolyte membrane, and a separator stacked on the membrane-electrode assembly, for example. For the formation of the catalyst layer, the so-called wet process is often employed, involving the use of catalyst ink. The catalyst ink used consists of a solvent in which carbon particles that carry a catalyst, such as platinum (catalyst carrier conductive material) and a solid polymer electrolyte, which is an ion exchange resin, are dispersed. The catalyst ink is applied to the electrolyte membrane or the gas diffusion layer and then dried. In recent years, a dry coating (powder coating) process is being adopted, whereby, using an electrostatic force or the flow of a gas (carrier gas), a powder catalytic material is caused to fly toward the electrolyte membrane or the gas diffusion layer so as to cause the material to become directly attached to the membrane or layer (see Patent Document 1: JP Patent Publication (Kokai) No.2003-163011 A).

In either method, in order to improve the cell performance of the solid polymer fuel cell, the hydrogen and oxygen from the separator must be supplied to the interface (three-phase interface) between the electrolyte membrane and the catalyst layer in a uniform and swift manner. At the same time, it is also necessary to allow the water produced on the oxygen electrode side to be quickly discharged to the separator. Therefore, it is desirable that a well-balanced three-phase interface in which electron conductivity, a gas diffusion path, and a proton conduction path for the catalytic material are sufficiently established is also formed in the catalytic material (catalytic particles).

For this purpose, Patent Document 2 (JP Patent Publication (Kokai) No.8-264190 A) proposes utilizing a solid polymer electrolyte in the form of a colloid in catalyst ink. Namely, a dispersion solution consisting of an organic solvent in which a catalyst carrier conductive material is dispersed is obtained, and then the dispersion solution is mixed with an alcohol solution of a solid polymer electrolyte, whereby a colloid of the solid polymer electrolyte is produced. The colloid is then caused to become adsorbed on the catalyst carrier conductive material, thereby obtaining a liquid mixture. The liquid mixture is then applied to one side of the gas diffusion layer so as to prepare an electrode.

The publication teaches as follows. Namely, by producing a colloid of the solid polymer electrolyte, it becomes possible to bring the catalyst carrier conductive material (carbon powder on which a noble metal catalyst is carried) into contact with the solid polymer electrolyte sufficiently. As a result, it becomes possible to cause the fine particles of the catalyst and the solid polymer electrolyte to be dispersed in the catalyst layer in a manner such that they are a sufficiently closely attached to each other. In this way, a good three-phase interface is formed in the catalyst layer.
Patent Document 1: JP Patent Publication (Kokai) No.2003-163011 A
Patent Document 2: JP Patent Publication (Kokai) No.8-264190 A

### DISCLOSURE OF THE INVENTION

In the solid polymer fuel cell electrode produced by the method according to Patent Document 2, it is expected that a good three-phase interface will be formed between the catalyst layer and the electrolyte membrane so that a fuel cell with a high generation efficiency would be obtained, as compared with a solid polymer fuel cell electrode in which the solid polymer electrolyte is not in the form of a colloid. However, in Patent Document 2, the so-called wet process is employed whereby the catalyst ink is composed of a liquid mixture paste, which is applied and then dried so as to prepare a catalyst layer. In this method, it is expected that the gas diffusion path would be partially destroyed, so that it would be difficult to form an effective three-phase interface.

The invention is directed to a method for producing a solid polymer fuel cell electrode using an ink that is prepared such that the solid polymer electrolyte is in the form of a colloid. It is an object of the invention to achieve enhanced cell performance by making the three-phase interface that is formed more perfect. More specifically, it is an object of the invention to provide a catalytic material for the aforementioned purpose, a method for manufacturing the same, and a solid polymer fuel cell electrode using the same.

In order to achieve the aforementioned objects of the invention, the inventors conducted a number of experiments and much analysis, which led to the understanding that a catalyst layer having a more perfect three-phase interface can be obtained and greatly enhanced cell performance can be achieved by adopting the following method. Namely, when preparing an ink in which a solid polymer electrolyte is colloidalized, a poor solvent with respect to the solid polymer electrolyte is actively utilized, and, instead of applying the thus prepared ink onto the electrolyte membrane or the gas diffusion layer directly by the wet process, the ink is dried and the solvent is removed, thereby obtaining a catalytic material in powder form. The catalytic material powder is then applied to the electrolyte membrane or the gas diffusion layer by a dry process, such as according to Patent Document 1.

The invention is based on this understanding, and it provides a method for manufacturing a powder catalytic material comprising the steps of mixing at least a catalyst carrier conductive material, a solid polymer electrolyte, and a good solvent and a poor solvent with respect to the solid polymer electrolyte, thereby preparing an ink in which at least part of the solid polymer electrolyte is colloidalized, and drying the ink so as to obtain a powder catalytic material.

In accordance with the invention, the catalyst carrier conductive material may comprise a catalyst carrier conductive material conventionally used for the manufacture of this type of solid polymer fuel cell electrode, such as, for example, carbon powder on which a catalytic material (such as Pt) is carried. Similarly, the solid polymer electrolyte may comprise a solid polymer electrolyte conventionally used for the manufacture of this type of solid polymer fuel cell electrode, such as, for example, perfluorocarbon sulfonic acid ionomer.

Examples of the good solvent with respect to the solid polymer electrolyte include propylene glycol, ethylene glycol, (iso, n-) propyl alcohol, and ethyl alcohol. An appropriate one is selected depending on the type of the solid polymer electrolyte used so that a desired solubility can be obtained. The good solvent may consist of one kind of good solvent or a mixture of two or more kinds.

The poor solvent with respect to the solid polymer electrolyte is used for causing the solid polymer electrolyte dissolved in the good solvent to be actively colloidalized. Examples include water, cyclohexanol, n-butyl acetate, n-acetic acid, n-butylamine, methyl amyl ketone, and tetrahydrofuran. An appropriate one is selected depending on the type of the solid polymer electrolyte used so that desired colloidalization can be achieved. The poor solvent may consist of one kind of poor solvent or a combination of two or more kinds.

Preferably, in the liquid mixture of a catalyst carrier conductive material, a solid polymer electrolyte, and a good solvent and a poor solvent with respect to the solid polymer electrolyte, the value of poor solvent/good solvent is 2 or more. If the value of poor solvent/good solvent is less than 2, sufficient colloidalization cannot be achieved, and no significant improvement is obtained in the battery performance of the manufactured solid polymer fuel cell. There is no theoretical upper limit in the amount of the poor solvent.

As a factor involved in the colloidalization of a dissolved substance, the dielectric constant of the solvent can be cited. In experiments conducted by the present inventors, it was revealed that desired colloidalization can be achieved by using a poor solvent with dielectric constant of 15 or lower or 35 or higher, thereby making it possible to manufacture a desired powder catalytic material.

In the method for manufacturing a powder catalytic material according to the invention, the order in which a catalyst carrier conductive material, a solid polymer electrolyte, and a good solvent and a poor solvent with respect to the solid polymer electrolyte are mixed is not particularly limited, as long as an ink in which at least part of the solid polymer electrolyte is colloidalized is prepared prior to the drying step. For example, a liquid mixture of a catalyst carrier conductive material, a solid polymer electrolyte, and a good solvent with respect to the solid polymer electrolyte may be prepared first, and then a poor solvent with respect to the solid polymer electrolyte may be added therein, thereby preparing an ink in which at least part of the solid polymer electrolyte is colloidalized. Alternatively, a liquid mixture of a catalyst carrier conductive material and a good solvent and a poor solvent with respect to a solid polymer electrolyte may be prepared, and then the solid polymer electrolyte may be added therein, thereby preparing an ink in which at least part of the solid polymer electrolyte is colloidalized. It has been experimentally confirmed that desired colloidalization can be achieved by either method.

In accordance with the invention, instead of applying the ink prepared as described above, in which at least part of the solid polymer electrolyte is colloidalized, to the electrolyte membrane or the gas diffusion layer as is by wet process, the ink is dried and the good solvent and the poor solvent are removed so as to once obtain a powder catalytic material. Thus, the invention also provides a powder catalytic material for a solid polymer fuel cell comprising a catalyst carrier conductive material and a solid polymer electrolyte, in which the solid polymer electrolyte is integrally attached to the catalyst carrier conductive material in a coagulated state.

The operation for removing the solvent by drying the ink in which at least part of the solid polymer electrolyte is colloidalized can be easily performed. In addition, the resultant powder catalytic material is configured such that the catalyst particles (catalyst carrier conductive material) and the resin particles (solid polymer electrolyte) are attached to each other, with the solvent sufficiently removed. As a result, a high void fraction is obtained, so that improved gas diffusivity can be achieved. Furthermore, as compared with a powder obtained by drying without colloidalization, the thickness of the resin layer can be increased, thereby increasing the ion conduction path. Thus, in a catalyst layer formed by applying the powder catalytic material obtained by the manufacturing method of the invention, a good three-phase interface is formed even inside the catalyst particles, whereby the performance of a resultant battery can be reliably improved.

As described above, the solid polymer fuel cell electrode according to the invention can be obtained by forming a catalyst layer in which a powder catalytic material is attached to an electrolyte membrane or a gas diffusion layer by an appropriate powder coating (dry coating) method, such as the electrostatic transfer method as known in the art. Examples of the electrolyte membrane include perfluorosulfonic acid membrane and hydrocarbon-based membrane. Examples of the gas diffusion membrane include carbon cloth and carbon paper. In the case of gas diffusion membrane, it goes without saying that a catalyst layer is only formed on either one of the sides.

### BRIEF DESCRIPTION OF THE DRAWINGS

Fig. 1 shows a conceptual chart of a membrane-electrode assembly (MEA) in a solid polymer fuel cell.
Fig. 2 schematically shows an example of a method for preparing a powder catalytic material according to the invention.
Fig. 3 shows a graph illustrating the battery performance of fuel battery cells according to Examples 1 and 2 and a Comparative Example.
Fig. 4 shows a graph illustrating the battery performance of a fuel battery cell according to Example 3.

In the drawings, numeral 1 designates an electrolyte membrane, 2 designates a catalyst layer, 3 designates a gas diffusion layer, 4 designates a membrane-electrode assembly (MEA), 10 designates a solid polymer electrolyte, 20 designates a solid polymer electrolyte dissolved in a solvent, 30 designates a solid polymer electrolyte existing in the solvent in the form of a colloid, and 40 designates a powder catalytic material obtained by drying.

### BEST MODES FOR CARRYING OUT THE INVENTION

The invention will be hereafter described by way of examples thereof.

### [Example 1]

Ink A was prepared with the mixture ratio (% by weight) shown in Table 1 in the following order. First, a liquid mixture of a catalyst carrier conductive material (60wt%Pt/C), a solid polymer electrolyte, water (dielectric constant 78.5), and propylene glycol (good solvent; dielectric constant 32.0) was prepared (a conceptual chart is shown in Fig. 2a). While stirring the liquid mixture, cyclohexanol (poor solvent; dielectric constant 15.0) was added. After stirring for approximately 30 minutes, an ink in which part of the electrolyte was colloidalized was obtained (a conceptual chart is shown in Fig. 2b). The ink was then dried with a spray dryer under the conditions consisting of a solution delivery rate of 10 cc/min, spray pressure of 0.1MPa, and a drying temperature of 80°C, thereby preparing a powder catalytic material (a conceptual chart is shown in Fig. 2c). In Figs. 2a to 2c, numeral 10 designates the catalyst carrier conductive material, 20 designates the solid polymer electrolyte dissolved in the solvent, 30 designates the solid polymer electrolyte existing in the solvent in the form of a colloid, and 40 designates the powder catalytic material obtained by drying.

**Table 1**

| [Ink A] | |
|---|---|
| catalyst carrier conductive material | 1 |
| solid polymer electrolyte | 0.4 |
| water | 4 |
| propylene glycol | 2.5 |
| cyclohexanol | 6 |
| (cyclohexanol + water) /propylene glycol | 4.0 |

The prepared powder catalytic material was applied to both sides of the electrolyte membrane to 0.20 mg/cm2 and 0.50 mg/cm2 by spray coating. The material was then fixed by a roll press machine under conditions of 160°C and 30 kgf/cm, thereby preparing a solid polymer fuel cell electrode.

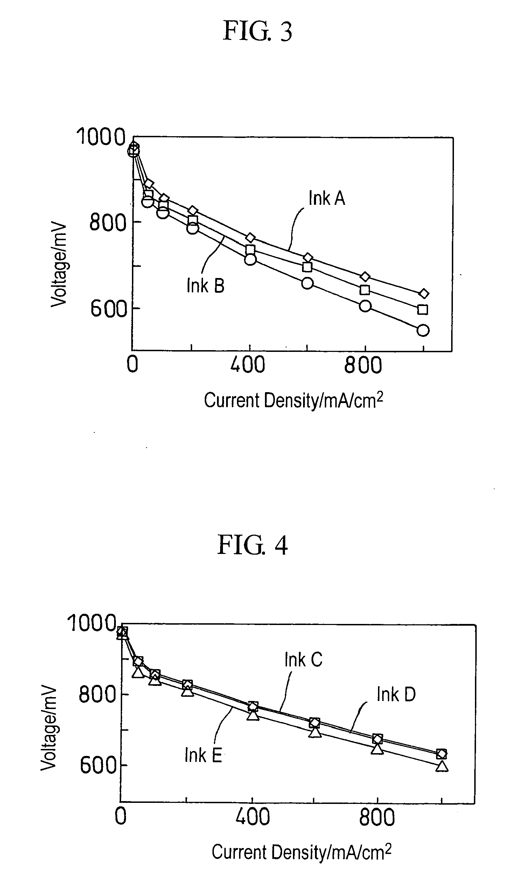

Using this solid polymer fuel cell electrode, a fuel cell was made, and its cell performance was evaluated in terms of the relationship between current density and voltage. The result is shown in Fig. 3, where ink A is indicated by symbol (-0-).

### [Example 2]

An ink was prepared in the same way as in Example 1 with the exception that the order of preparation was such as follows. Namely, a liquid mixture of catalyst carrier conductive material (60wt%Pt/C), water, propylene glycol (good solvent), and cyclohexanol (poor solvent) was prepared, to which a solid polymer electrolyte solution was added while stirring. The mixture was then stirred for 30 minutes, whereby an ink in the form of colloid was obtained.

Thereafter, the ink was dried in the same way as in Example 1 so as to prepare a powder catalytic material. Using the thus prepared powder catalytic material in a solid polymer fuel cell electrode, a fuel battery cell was made. Its battery performance was then evaluated in terms of the relationship between current density and voltage. The result of the evaluation is shown in Fig. 3, where ink B is indicated by symbol (-□-).

### [Comparative Example 1]

An ink was prepared in the same way as in Example 1 with the exception that no cyclohexanol (poor solvent) was added. The ink was then allowed to stand for 30 minutes, whereupon no colloidalization of the electrolyte was observed.

The ink was then dried with a spray dryer under the conditions consisting of a solution delivery rate of 10 cc/min, spray pressure of 0.1MPa, and drying temperature of 80°C, thereby preparing a powder catalytic material. Thereafter, a fuel battery cell was prepared using the powder catalytic material in a solid polymer fuel cell electrode in the same way as in Example 1. Its battery performance was evaluated in terms of the relationship between current density and voltage. The result is shown in Fig. 3, where Comparative Example 1 is indicated by symbol (-o-).

### [Analysis]

The graph in Fig. 3 shows that the cells according to Examples 1 and 2 possess higher battery performance than that of the Comparative Example, thus indicating the validity of the present invention.

### [Example 3]

Inks C, D, and E were prepared with the mixture ratios (% by weight) shown in Table 2 in the same order as in Example 1. By stirring each ink for approximately 30 minutes, an ink in which part of the electrolyte was colloidalized was obtained. Each of the inks was dried with a spray dryer in the same way as in Example 1, thereby making a powder catalytic material.

**Table 2**

| | Ink C | Ink D | Ink E |
|---|---|---|---|
| Catalyst carrier conductive material | 1 | 1 | 1 |
| Solid polymer electrolyte | 0.4 | 0.4 | 0.4 |
| Water | 4 | 4 | 4 |
| Propylene glycol | 4 | 4 | 4 |
| Cyclohexanol | 6 | 4 | 2 |
| (Cyclohexanol + Water) /Propylene glycol | 2.5 | 2 | 1.5 |

The prepared powder catalytic material was applied to both sides of the electrolyte membrane to 0.20 mg/cm2 and 0.50 mg/cm2 by spray coating. The material was then fixed by a roll press machine under the same conditions as in Example 1, thereby preparing a solid polymer fuel cell electrode.

Using this solid polymer fuel cell electrode, a fuel cell was made, and its cell performance was evaluated in terms of the relationship between current density and voltage. The result is shown in Fig. 4.

### [Analysis]

The graph in Fig. 4 shows that while the fuel battery cells using inks C and D have substantially the same battery performance, the battery performance of the fuel battery cell using ink E is somewhat inferior. This shows that it is particularly effective in the present invention when the value of (poor solvent including water)/(good solvent) is 2 or more.

## Claims

1. A method for manufacturing a powder catalytic material, comprising the steps of mixing at least a catalyst carrier conductive material, a solid polymer electrolyte, and a good solvent and a poor solvent with respect to said solid polymer electrolyte, thereby preparing an ink in which at least part of said solid polymer electrolyte is colloidalized, and drying said ink so as to obtain a powder catalytic material.

2. A method for manufacturing a powder catalytic material, comprising the steps of mixing at least a catalyst carrier conductive material, a solid polymer electrolyte, and a good solvent with respect to said solid polymer electrolyte, adding a poor solvent with respect to said solid polymer electrolyte to the mixture, thereby preparing an ink in which at least part of said solid polymer electrolyte is colloidalized, and drying said ink so as to obtain a powder catalytic material.

3. A method for manufacturing a powder catalytic material, comprising the steps of mixing at least a catalyst carrier conductive material, and a good solvent and a poor solvent with respect to a solid polymer electrolyte, adding a solid polymer electrolyte to the mixture, thereby preparing an ink in which at least part of said solid polymer electrolyte is colloidalized, and drying said ink so as to obtain a powder catalytic material.

4. The method for manufacturing a powder catalytic material according to any one of claims 1 to 3, wherein, in the solution in which said catalyst carrier conductive material, said solid polymer electrolyte, and said good solvent and said poor solvent with respect to said solid polymer electrolyte are mixed, the value of poor solvent/good solvent is 2 or more.

5. The method for manufacturing a powder catalytic material according to any one of claims 1 to 3, wherein said poor solvent has a dielectric constant of 15 or less, or 35 or more.

6. The method for manufacturing a powder catalytic material according to any one of claims 1 to 5, wherein said good solvent comprises one or more kinds selected from propylene glycol, ethylene glycol, (iso, n-) propyl alcohol, and ethyl alcohol, and wherein said poor solvent comprises one or more kinds selected from water, cyclohexanol, n-butyl acetate, n-acetic acid, n-butylamine, methyl amyl ketone, and tetrahydrofuran.

7. A solid polymer fuel cell electrode produced by applying the powder catalytic material obtained by the manufacturing method according to any one of claims 1 to 6 to an electrolyte membrane or a gas diffusion layer.

8. A powder catalytic material for a solid polymer fuel cell composed of a catalyst carrier conductive material and a solid polymer electrolyte, wherein said solid polymer electrolyte is integrally attached to said catalyst carrier conductive material in a coagulated state.
